(19) Europäisches Patentamt
European Patent Office
Office européen des brevets

(11) **EP 2 508 739 A1**

(12) **EUROPEAN PATENT APPLICATION**

(43) Date of publication:
**10.10.2012 Bulletin 2012/41**

(51) Int Cl.:
*F02D 41/10* (2006.01)     *F02D 11/10* (2006.01)
*F02D 41/02* (2006.01)     *F02P 5/15* (2006.01)

(21) Application number: **11161086.1**

(22) Date of filing: **05.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fiat Powertrain Technologies S.p.A.**
**10135 Torino (IT)**

(72) Inventors:
• **Riegel, Alessandro**
  **80038 Pomigliano d'Arco (Napoli) (IT)**

• **Masiero, Claudio**
  **13135 Torino (IT)**
• **Santamarina, Matteo**
  **13135 Torino (IT)**
• **Vennettilli, Nando**
  **13135 Torino (IT)**

(74) Representative: **Notaro, Giancarlo**
**Buzzi, Notaro & Antonielli d'Oulx**
**Via Maria Vittoria 18**
**10123 Torino (IT)**

(54) **A method for the assistance of a motor vehicle driver during a drive off maneuver**

(57)     A method for the assistance to a motor-vehicle driver (1) during a drive-off manoeuvre, wherein the motor vehicle (1) comprises:
- an internal-combustion engine (2);
- a transmission, connected to the internal-combustion engine (2) by means of a clutch that can be operated by the driver, said transmission further comprising a gearbox that can be operated by the driver;
- an engine-control unit, operatively connected to the internal-combustion engine (2) and including an engine-r.p.m. controller (32);
- a first pedal (8) for the actuation of the clutch between a disengaged position, in which the transmission is uncoupled from the internal-combustion engine, and an engaged position, in which the transmission is coupled to the internal-combustion engine;
- a second pedal (10) for actuating a braking system of the motor vehicle (1);
- first sensor means (14), designed to detect a position of the first pedal (8);
- second sensor means (16), designed to detect a position of the second pedal (10);
- third sensor means (22), designed to detect an advancement speed of the motor vehicle ($V_{vehicle}$); and
- fourth sensor means (24), designed to detect an acceleration of the motor vehicle (1).
    The method comprises:
- a first step of recognition of a start of a drive-off manoeuvre as a function of signals (S 14, S16, S22) coming from the first, second, and third sensor means (14, 16, 22);

- a second step (30) of calculation of a value of target rotational speed of the drive-off manoeuvre ($n_{obj,do}$);
- a third step of sending of the value of target rotational speed of the drive-off manoeuvre ($n_{obj,do}$) to the engine-r.p.m. controller (32);
- a fourth step of calculation of a gain of the engine-r.p.m. controller (32) as a function of a signal (S24) coming from the fourth sensor means; and
- a fifth step of calculation of a value of target torque ($T_{obj}$) by the engine-r.p.m. controller (32) to maintain a rotational speed of the internal-combustion engine equal to the value of target rotational speed of the drive-off manoeuvre ($n_{obj,do}$),
wherein the second, third, fourth, and fifth steps develop if in said first step a beginning of a drive-off manoeuvre is recognized and are repeated in sequence until the end of the drive-off manoeuvre.

FIG. 3A

**Description**

Field of the invention

The present invention relates to a method for the assistance of a motor-vehicle driver during a drive-off manoeuvre, wherein the motor vehicle comprises:

- an internal-combustion engine;
- a transmission, connected to said internal-combustion engine by means of a clutch that can be operated by the driver, the transmission further comprising a gearbox that can be operated by the driver;
- an engine-control unit, operatively connected to the internal-combustion engine and comprising an engine-r.p.m. controller;
- a first pedal for the actuation of said clutch between a disengaged position in which the transmission is uncoupled from the internal-combustion engine and an engaged position in which the transmission is coupled to the internal-combustion engine;
- a second pedal for the actuation of a braking system of the motor vehicle;
- first sensor means arranged to detect a position of said first pedal;
- second sensor means arranged to detect a position of said second pedal;
- third sensor means arranged to detect an advancement speed of the motor vehicle; and
- fourth sensor means arranged to detect an acceleration of the motor vehicle.

General technical problem

A drive-off manoeuvre is defined as a manoeuvre in which the engine and the transmission of a motor vehicle are mechanically coupled through actuation of a clutch in order to transmit the motion to the wheels of the vehicle. When the choice of the engine apparatus of a vehicle falls on the internal-combustion engine (i.e., in almost all motor vehicles in circulation), one of the major problems of the drive-off manoeuvre is linked to the intrinsic impossibility of the internal-combustion engine to generate a high torque at low r.p.m.

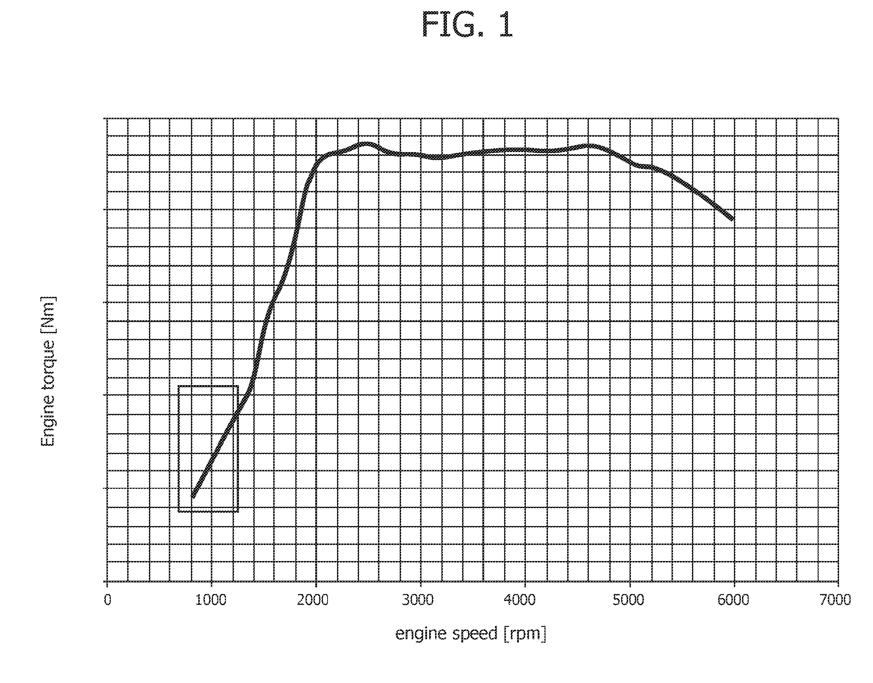

With reference to Figure 1, which describes the plot of the torque supplied by an internal-combustion engine as a function of the rotational speed (here a single curve is represented, corresponding to a full load condition), in a point corresponding to the idle speed (identified by a squared area), the torque that can be delivered by the engine is very low as compared to the maximum torque.

The result is in general that of an engine stall, with consequent shut-off due to insufficiency of the torque delivered, or else that of an abrupt drop in the engine r.p.m. itself with consequent irregularities during the manoeuvre, or else again that of impulsive acceleration phenomena during the drive-off manoeuvre (the so-called "engagement shock").

The problems described above are aggravated by recent trends in the design of engines for motor vehicles, which envisage a reduction of the engine displacement and a lengthening of the transmission ratios in order to save fuel, reduce the emissions of pollutant species and reduce the production costs. Current engines are very frequently supercharged by means of a turbocharger, but this is not sufficient since at low r.p.m. the effect of the supercharger assembly is not appreciable (even the supercharger assembly may turn out to be an obstacle, in the proximity of idle speed, for the increase of torque and r.p.m.).

Consequently, the phenomena described previously arise with increasingly higher frequency, arousing dissatisfaction with consequent complaints by the users.

It should moreover be added that in a drive-off manoeuvre in manual-transmission vehicles (where by this is meant vehicles with manually operated gearbox and clutch operated by the driver by means of a pedal) the negative aspects described previously are further amplified by the following facts:

- inevitable dispersion between the position of the pedal and the effective position of the elements of the clutch;
- backlash on the accelerator pedal;
- increase in the weight of the vehicle and the slope of the road;
- clutch wear.

Of course, it is necessary to take into account that, even in case the best conditions possible for the drive-off manoeuvre were to occur, the result would be in any case markedly conditioned by the way in which the driver modulates the actuation of the clutch. In particular, since the transmission is manual, it is not possible to control the actuation of the clutch electronically.

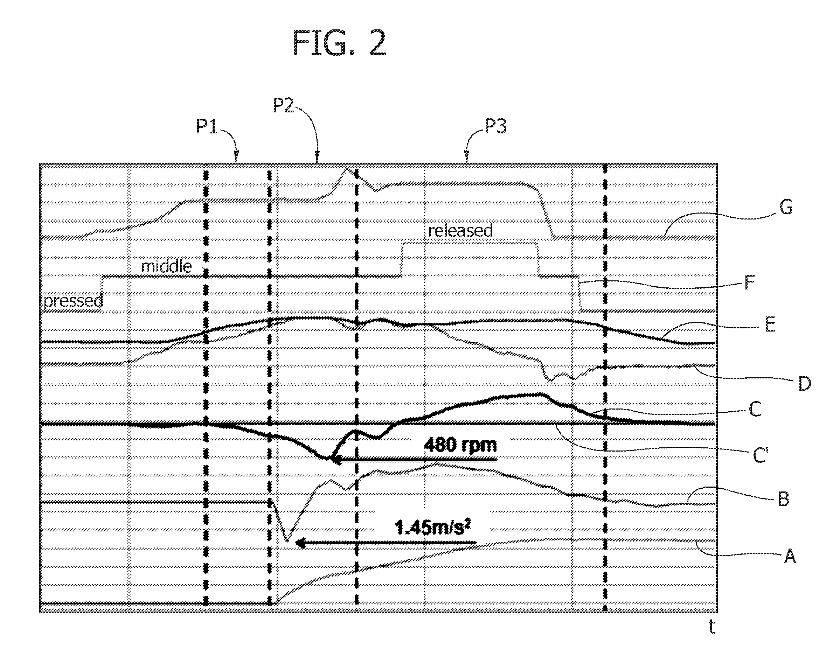

With reference to Figure 2, illustrated therein is a diagram of the evolution of various characteristic quantities of the operation of the vehicle and of the internal-combustion engine as a function of time and observed during a drive-off manoeuvre.

In particular the diagram of Figure 2 comprises:

- a first curve A, describing the plot of the advancement speed of the vehicle;
- a second curve B, showing the plot of the vehicle acceleration;
- a third curve C, showing the rotational speed of the internal-combustion engine;
- a fourth curve C', showing a target rotational speed of the internal-combustion engine;
- a fifth curve D, showing the torque supplied by the engine;
- a sixth curve E, showing the maximum torque that can be delivered by the internal-combustion engine in the corresponding load condition;
- a seventh curve F, showing the position of a pedal for control of the clutch; and
- an eighth curve G, showing the position of the accelerator pedal.

The diagram of Figure 2 is moreover divided into three intervals designated by the references P1, P2, P3 corresponding to three different stages of the drive-off manoeuvre.

In particular, the interval P1 corresponds to a condition in which the vehicle is stationary and the force by which the friction surfaces of the clutch are drawn close to each other is such that the torque transmitted to the transmission of the vehicle is not sufficient to overcome the static friction of the vehicle itself. In this case, the difference of speed between the friction surfaces is maximum and wear thereof occurs. Moreover, due to the substantially braking effect of the friction surfaces of the clutch, the speed of the internal-combustion engine decreases.

In the interval P2 the torque transmitted by the clutch to the transmission of the vehicle is greater with respect to the interval P1 since the force by which the surfaces of friction are drawn close to each other is greater.

As a result, the vehicle starts moving, and the rotational speed of the engine increases. The evolution during said interval is markedly dependent upon the modality with which the clutch pedal is operated.

In the interval P3, the friction surfaces of the clutch are firmly coupled and the rotational speeds of the engine and of the transmission, in particular of a primary shaft of the gearbox, are identical. As a result, all the inertia of the vehicle comes to weigh instantaneously on the engine, causing a second drop of rotational speed. Said phenomenon is usually referred to as "engagement shock".

At the end of the interval P3, the drive-off manoeuvre can be considered completed since the clutch is substantially in an engaged condition and the engine has reached the target rotational speed, to which there corresponds the advancement speed of the vehicle that depends upon the transmission ratio of the vehicle transmission.

What can be noted is that the target speed fixed by the engine control is substantially constant. As a result, the maximum torque that can be delivered by the engine remains substantially equal to the one that can be delivered at idle speed, and the only intervention by the engine control consists in raising the supply of torque by the internal-combustion engine to the maximum value when a strong decrease of rotational speed is perceived.

Unfortunately, said intervention is frequently insufficient and causes an abrupt decrease of rotational speed and an abrupt sharp acceleration of the vehicle, which proves particularly inconvenient for the driver and the passengers.

Object of the invention

The object of the present invention is to overcome the technical problems described previously.

In particular, the object of the present invention is to render the drive-off manoeuvre as regular as possible increasing the comfort on board the vehicle and preventing stalling and/or abrupt reductions in the rotational speed of the internal combustion engine.

Summary of the invention

The object of the present invention is achieved by a device having the features forming the subject of the annexed claims, which form an integral part of the technical disclosure herein provided in relation to the invention.

In particular, the object of the invention is achieved by a method for assistance having all the features specified at the beginning of the present description and further characterized in that it comprises:

- a first step of recognition of the beginning of a drive-off manoeuvre as a function of signals coming from the first, second, and third sensor means;
- a second step of calculation of a target rotational speed of the internal-combustion engine for the drive-off manoeuvre;
- a third step of sending of the value of the target rotational speed of the drive-off manoeuvre to the engine-r.p.m. controller;

- a fourth step of calculation of a gain of the engine-r.p.m. controller as a function of a signal coming from the fourth sensor means; and
- a fifth step of calculation of a value of target torque by the engine-r.p.m. controller with the gain calculated in the fourth step in order to maintain a rotational speed of the internal-combustion engine equal to the target rotational speed for the drive-off manoeuvre,
  wherein the second, third, fourth, and fifth steps are repeated in sequence from the beginning to the end of the drive-off manoeuvre.

Brief description of the figures

The invention will now be described with reference to the annexed figures, provided purely by way of non-limiting example, wherein:

- Figure 1, previously described, illustrates the plot of the torque supplied by an internal-combustion engine as a function of the rotational speed thereof;
- Figure 2, previously described, illustrates the plot of various characteristic quantities of a vehicle and of an internal-combustion engine during a drive-off manoeuvre;
- Figure 3 is a schematic illustration of a vehicle and of components installed thereon;
- Figure 3A is a diagram representing the method of assistance according to the invention;
- Figure 4 is a diagram that illustrates a regulation strategy of the method according to the invention; and
- Figure 5 illustrates comparative diagrams of drive-off manoeuvres carried out with and without the method of assistance according to the invention.

Detailed description

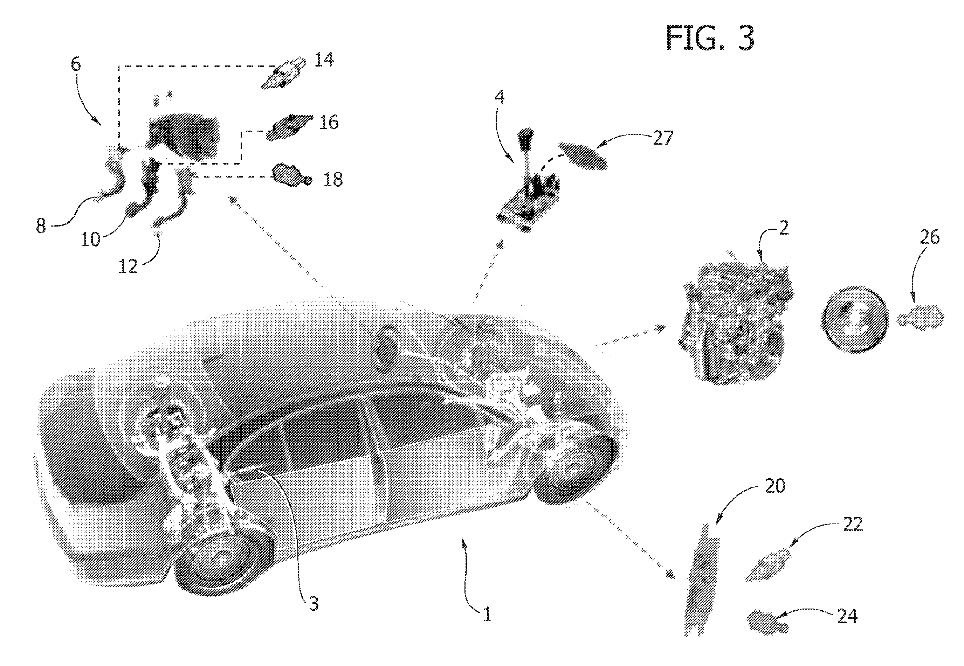

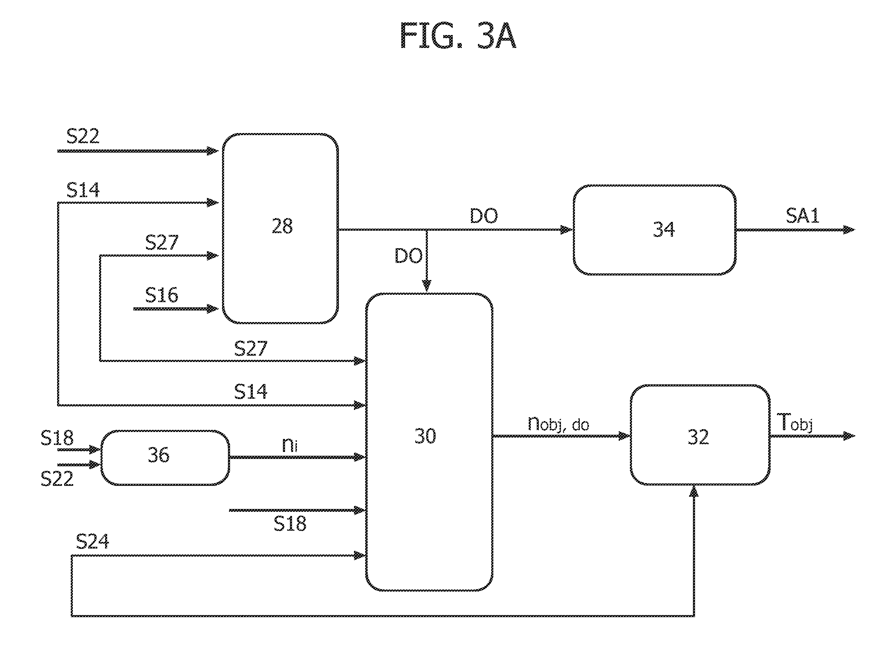

With reference to Figure 3, the reference number 1 designates as a whole a motor vehicle. The motor vehicle 1 comprises an internal-combustion engine 2 and a transmission 3, in particular of a mechanical type comprising a manually operated gearbox that can be operated by means of a lever 4 set inside the passenger compartment of the vehicle. The transmission 3 is connected to the internal-combustion engine 2 by means of a clutch that can be operated by the driver (not illustrated), per se known.

The vehicle can be controlled by the driver by means, i.a., of a pedal set 6 comprising a first pedal 8 for actuating the clutch, a second pedal 10 for actuating a braking system of the motor vehicle, and a third pedal 12 for torque regulation of the internal-combustion engine 2, in particular an accelerator pedal. The pedals 8, 10, 12 will sometimes be identified in the present description, respectively, as "clutch pedal", "brake pedal", and "accelerator pedal", using a terminology widely used in the reference technical field.

Installed on board the motor vehicle 1 is a plurality of sensor means for detecting various quantities and/or operating parameters of the engine 2 and of the vehicle 1.

In particular, operatively associated to the pedal set 6 are:

- a first sensor 14, arranged to detect a position of the clutch pedal 8; and
- a second sensor 16, arranged to detect a position of the brake pedal 10.

Moreover installed on the motor vehicle 1 is a brake-control module designated by the reference number 20 installed on which are :

- a third sensor 22, arranged to detect a speed of the motor vehicle 1; and
- a fourth sensor 24, in particular an accelerometer, arranged to detect the longitudinal and transverse accelerations of the motor vehicle.

A fifth sensor, designated as a whole by the reference number 26, is, instead, arranged to detect the rotational speed of the internal-combustion engine 2.

Moreover, a sixth sensor, which is designated by the reference number 18 and which will be widely described later, is operatively associated to the pedal set 6 and is arranged to detect the position of the accelerator pedal 12.

On some better equipped vehicles, a seventh sensor 27, is installed designed to supply a signal attesting the position of "neutral" of the lever 4.

With the support of Figure 3A, the method of assistance according to the invention will now be described in detail.

The representation of Figure 3A is arranged as a functional block diagram that illustrates the various steps of the method of assistance according to the invention, which comprise:

- a first step of recognition of the start of a drive-off manoeuvre represented with a first functional block 28;
- a second step of calculation of a target rotational speed of the drive-off manoeuvre represented with a second functional block 30;
- a third step of sending the value of the target speed of the drive-off manoeuvre to an engine-r.p.m. controller (preferably included in an engine electronic control unit of the motor vehicle 1) represented with a third functional block 32;
- a fourth step of calculation of a gain of the engine-r.p.m. controller 32; and
- a fifth step of calculation of a value of target torque by the engine-r.p.m. controller 32.

In a preferred embodiment, the engine-r.p.m. controller 32 is an idle-speed controller (ISC).

The second, third, fourth, and fifth steps are performed provided that the first step has yielded a positive outcome, i.e., the start of the drive-off manoeuvre has been recognized.

The mode with which the various steps of the method of assistance to the drive-off manoeuvre develop will now be described in detail, and further details on each of the steps mentioned previously will be provided.

The first step of recognition of the start of a drive-off manoeuvre is carried out as a function of signals coming from a set of sensors amongst those previously described. In particular, the step of recognition of the start of the drive-off manoeuvre is carried out on the basis of:

- a signal S22 coming from the sensor 22 and representing an advancement speed of the vehicle 1;
- a signal S 14 coming from the sensor 14 and representing a position of the clutch pedal 8;
- a signal S16 coming from the sensor 16 and representing a position of the brake pedal 10; and
- a signal S27 representing a condition of neutral/gear engaged (in vehicles on which the sensor 27 is present).

The first step of recognition of the start of a drive-off manoeuvre has positive outcome (incipient drive-off manoeuvre, with issuing of a signal DO - Figure 3A) if the following conditions arise:

- the sensor 22 supplies a signal that indicates that the motor vehicle 1 advances with a speed lower than a lower-threshold speed, where the lower-threshold speed can be calibrated;
- the sensor 14 for detecting the position of the clutch pedal 8 supplies a signal that indicates a movement of the pedal 8 from a lowered position, corresponding to a condition of disengaged clutch, to a raised position, corresponding to a condition of engaged clutch;
- the sensor 16 supplies a signal S16 corresponding to a condition in which there is no action by the driver on the brake pedal 10;
- the sensor 27, if present, supplies a signal S27 corresponding to a condition of gear engaged; and
- no failures are present in the sensors 22, 14, 16, 27 (if present).

The above conditions are linked to one another by a logic criterion of an "AND" type, i.e., they must all be verified for a certain time interval that can be calibrated according to the internal-combustion engine and the vehicle. In the case where the start of a drive-off manoeuvre is recognized, the method envisages activation of strategies for assistance to the drive-off manoeuvre comprising the second, third, fourth, and fifth steps mentioned previously with the addition, only for the vehicles wherein the internal-combustion engine 2 is of the spark ignition type, of a further step of creation and management of a reserve of torque of the engine 2 represented in a fourth functional block 34.

It should be noted that in some embodiments it may be envisaged that the first step of recognition of the start of a drive-off manoeuvre develops not only as a function of the signals coming from the sensors 22, 14, 16 and 27 (if present) but also as a function of a signal S24 coming from the sensor 24 and representing the acceleration of the motor vehicle 1 and of a signal coming from the sensor 26 and representing the rotational speed of the internal-combustion engine 2.

The ensuing detailed description regards the second, third, fourth, fifth steps and affords a clearer understanding of the meaning of the strategies of assistance to the drive-off manoeuvre.

The second step envisages calculation of a target rotational speed for the drive-off manoeuvre synthetically designated by the reference $n_{obj,do}$ (at times referred to as "target rotational speed", in what follows).

The target rotational speed $n_{obj,do}$ is a parameter corresponding to the internal-combustion engine 2 and is the result of the processing of the signals S 14, S27 (for the vehicles in which the sensor 27 is present), of a signal S18 coming from the sensor 18 and representing a position of the accelerator pedal 12, as well as of the signal S24 coming from the sensor 24 and representing the acceleration of the vehicle 1.

Added to these is a further signal $n_i$ that represents an ideal value of rotational speed of the internal-combustion engine 2, which in turn results from a processing of the signals S22 and S18.

For a better understanding of the physical meaning of the ideal rotational speed $n_i$ it is expedient to make a brief reference to the dynamic system constituted by the motor vehicle 1.

It is possible to describe a drive-off manoeuvre by means of an equation of dynamic equilibrium, in particular a balance of torque written across the clutch, which can be expressed as:

$$T_{engine}\left(RPM_{min}\right) = T_{internal\ losses}\left(RPM_{min}\right) + T_{engine\ inertia}\left(I_{engine}, \dot{\omega}_{engine}\right) + T_{vehicle}\left(\zeta\right)$$

with

$$\frac{dRPM}{d\vartheta} > 0$$

$$\frac{dV_{vehicle}}{d\vartheta} > 0$$

where:

RPM , RPM$_{min}$ indicate the rotational speed of the internal-combustion engine 2, where the subscript "min" refers to the condition of idling;

$T_{engine}$(RPM$_{min}$) is the torque supplied by the internal-combustion engine 2 at idling;

$T_{internal\ losses}$ (RPM$_{min}$) is a resistant torque that sums up all the effects of the mechanical and thermodynamic losses within the internal-combustion engine 2;

$T_{engine}$ inertia ($I_{engine}$, $\dot{\omega}_{engine}$) is an inertial torque of the internal-combustion engine 2, linked to the inertial masses and to an angular acceleration thereof, which is designated by $\dot{\omega}_{engine}$ ;

$\vartheta$ is the angle of rotation of a crankshaft of the internal-combustion engine 2;

$V_{vehicle}$ is the advancement speed of the vehicle 1;

$T_{vehicle}$ ($\zeta$) is the torque absorbed by the clutch, which is a function of a slip rate of the clutch itself designated by $\zeta$, where:

- $\zeta = 0$: the friction surfaces of the clutch are not coupled, and no torque is absorbed by the clutch ($T_{vehicle}$ ($\zeta$) = 0 );

- $0 < \zeta < 1$ : slip step (steps P1-P2 described previously): the friction surfaces slide with respect to one another, and part of the torque supplied by the engine 2 is absorbed by the clutch (another part is dissipated, with increase in temperature and wear of the friction surfaces);

- $\zeta=1$: clutch in the engaged position and friction surfaces completely coupled.

It should be noted that in the expression of $T_{vehicle}$($\zeta$) the contribution regarding the slope of the road surface has been neglected.

As is known, on the basis of considerations on the kinetic energy of the system, the resistant torque $T_{vehicle}$($\zeta$) may conveniently be expressed as the product of an equivalent moment of inertia of the vehicle $I_{vehicle,eq}$ (expressed with respect to the clutch) and of an equivalent angular acceleration $\dot{\omega}_{eq}$, which is the time derivative of an equivalent angular velocity $\omega_{eq}$, which is the angular velocity of a primary shaft of the gearbox of the vehicle 1 corresponding to an advancement speed $V_{vehicle}$.

The torque thus obtained is dimensionally an (equivalent) inertial torque designated by $T_{inertia\ vehicle,eq}$ ($\zeta$)

Whence we obtain

$$T_{engine}\left(RPM_{min}\right) - T_{internal\ losses}\left(RPM_{min}\right) = \left(I_{engine} \cdot \dot{\omega}_{engine}\right) + I_{vehicle,eq}\left(\zeta\right) \cdot \dot{\omega}_{eq}$$

i.e.,

$$T_{engine,effective} = T_{engine\ inertia} + T_{vehicle\ inertia,eq}(\zeta)$$

It is hence evident from the equation obtained that the internal-combustion engine 2 must supply a torque capable of overcoming the inertia of its own rotating parts and the inertia of the vehicle, which is increasing during the drive-off manoeuvre since the relations given above clearly indicate that, as the clutch is brought into the engaged position, the inertia of the vehicle weighs increasingly on the engine.

Said considerations apply also in a step of determination of the ideal rotational speed $n_i$, represented by a functional block 36, which receives at input the signals S22 and S 18.

In particular, the ideal rotational speed $n_i$ can be obtained by means of a balance of the momentum, with an anelastic-impact model, across the clutch assuming that the engagement thereof occurs instantaneously. From this it follows that the clutch slip rate is always equal to 1 in the calculation of $n_1$.

Balance of the momentum across the clutch (anelastic-impact model)

$$I_{engine} \cdot \omega_i + I_{vehicle,eq} \cdot \omega_{eq} = \left(I_{engine} + I_{vehicle,eq}\right) \cdot \omega_{end\ of\ manoeuvre},$$

with $\zeta = 1$

$$\omega_i = \frac{\left(I_{engine} + I_{vehicle,eq}\right) \cdot \omega_{end\ of\ manoeuvre} - I_{vehicle,eq} \cdot \omega_{eq}}{I_{engine}}$$

$$where \begin{cases} \omega_i = \omega_{end\ of\ manoeuvre} & if\ \omega_{eq} = \omega_{end\ of\ manoeuvre} \\ \omega_i > \omega_{end\ of\ manoeuvre} & if\ 0 < \omega_{eq} < \omega_{end\ of\ manoeuvre} \end{cases}$$

wherein

$\omega_{end\ of\ manoeuvre}$ is the rotational speed corresponding to the desired advancement speed at the end of the drive-off manoeuvre;

$\omega_i$ is the ideal rotational speed, i.e., the rotational speed that the internal-combustion engine 2 should have to prevent a stall in the event of instantaneous engagement of the clutch and that is instantaneously necessary to drive a load (the vehicle 1) at the desired end-of-manoeuvre speed.

The person skilled in the art will appreciate on the other hand that the equations provided herein use, for the angular velocities, a symbology for which the reference to the canonical units of measurement of the International System (rad/s) is implicit. Nothing rules out of course the use, with the adoption of corresponding conversion factors, of units of measurement that are more useful in the automotive field (r.p.m.), especially in electronic control units. In particular, all the rotational speeds can be expressed using the symbol "n" (with subscripts unchanged), whence the ideal rotational speed becomes $n_i$ in perfect uniformity with the notation adopted previously.

The ideal rotational speed $n_i$ calculated by means of the balance of the momentum cannot be used as target rotational speed of the drive-off manoeuvre at any moment thereof, since it is evident that, for extremely low or zero advancement speeds of the vehicle, said value would be excessively high and would lead pretty soon to a marked wear of the clutch and to safety problems.

The calculation of the target rotational speed of the drive-off manoeuvre $n_{obj,do}$ is carried out on the basis of the signals $n_i$ S 14, S27, S 18, S24 and of the signal DO that attests the recognition of the drive-off manoeuvre, the aim being to calculate a value of target rotational speed $n_{obj,do}$ compatible with the requirements of safety of the manoeuvre, integrity of the components of the vehicle, comfort on board the vehicle, and reduced vibrations. As will be described in detail hereinafter, the calculation of the target speed also takes into account the instant at which the calculation itself occurs within the drive-off manoeuvre.

This is followed by the third step, i.e., that of sending of the value of target rotational speed $n_{obj,do}$ to the engine-r.p.m. controller 32.

There then follows the fourth step of the method according to the invention, in which a gain of the engine-r.p.m. controller is calculated as a function of the signal S24 corresponding to the acceleration of the vehicle 1. The acceleration of the vehicle is in fact a consequence of the torque transmitted through the clutch and is consequently a good estimator of the torque itself.

It should be noted that the updating of the gain of the engine-r.p.m. controller 32 constitutes a considerable improvement over known solutions since it takes into account the increase of equivalent inertia of the vehicle during the drive-off manoeuvre.

In this way, so to speak, the internal-combustion engine 2 is made "aware" not only of the fact that there is a drive-off manoeuvre in progress but also and above all of how the drive-off manoeuvre is developing.

This is followed by the fifth step, that of calculating a value of target torque for the internal-combustion engine 2 performed by the engine-r.p.m. controller as a function of the value of target rotational speed $n_{obj,do}$ previously calculated.

This means that the engine-r.p.m. controller supplies to the engine-control unit (in what follows, at times referred to as "engine control") a torque demand equal to the value of torque necessary to maintain the r.p.m of the engine 2 itself equal to the target rotational speed $n_{obj,do}$. Said value of target torque is designated in Figure 3A by the reference $T_{obj}$. The value of target torque $T_{obj}$ is a function of the difference between the target rotational speed of the drive-off manoeuvre $n_{obj,do}$ and the effective rotational speed measured (via the sensor 26) and is calculated by means of the gain of the engine r.p.m. controller 32 calculated during the fourth step.

The target torque $T_{obj}$ is then processed in a maximum operator together with the other torque requests coming from other sensors/control units of the internal-combustion engine 2 and of the vehicle 1 so that the internal-combustion engine will always supply the maximum between the requirements of torque that arrives at it. It is not in fact certain that the torque demand forwarded by the engine-r.p.m. controller 32 to the engine control in the context of the method of assistance is the maximum from amongst those that are forwarded by other sensors/control units of the engine 2 itself and of the motor vehicle 1.

Of course, during the drive-off manoeuvre the second, third, fourth and fifth steps are repeated in sequence up to the end of the manoeuvre itself so as to calculate in real time the value of target rotational speed and the torque demand $T_{obj}$ to be forwarded to the engine control. The result is an increase in the rotational speed of the internal-combustion engine during the drive-off manoeuvre as result of the increase in torque required of the engine itself. It should moreover be noted, as will emerge clearly in what follows, that the word "end" does not necessarily indicate a condition of completion of the drive-off manoeuvre.

The increase in torque, as described, is of course a function of the target rotational speed $n_{obj,do}$ determined by the method according to the invention. The calculation of the target rotational speed $n_{obj,do}$ follows, however, a logic that, as described, also takes into account the instant of time in the context of the drive-off manoeuvre itself.

In fact, preferably during the repetition of second, third, fourth, and fifth steps of the method according to the invention the target rotational speed $n_{obj,do}$ is modulated in four successive stages.

In particular, a first stage, in which a command is issued for a first increase of $n_{obj,do}$, develops when the first step of the method according to the invention is completed in such a way as to prepare the entire system for the drive-off manoeuvre.

A second stage, in which a command is issued for a second increase of $n_{obj,do}$, develops when the sensor 18 detects an actuation of the accelerator pedal 12. For this purpose, preferably the command for the second increase is issued in the context of the so-called "electric dead band" of the accelerator pedal 12. The sensor 18 typically comprises two potentiometers set staggered with respect to one another so as to be activated at different moments by the accelerator pedal 12. In the time interval that elapses between the activation of the first and second potentiometers the engine control does not yet recognize the development of an action on the accelerator pedal 12. Said time interval assumes, as has been said, the name of "electric dead band". Thanks to the command for an increase within the "electric dead band", i.e., at a moment in which the engine 2 does not yet react to the requirements of the driver, it is possible, so to speak, to "prepare" the engine 2 for the drive-off manoeuvre.

A third stage, in which a command for a third increase of the target rotational speed $n_{obj,do}$ is issued, develops when the acceleration of the vehicle oversteps a threshold value that is an index of a determined stage of development of the drive-off manoeuvre itself. A fourth stage, instead, envisages a radiusing of the target rotational speed $n_{obj,do}$ to the value of ideal rotational speed $n_i$, the calculation of which has been described previously, the reason being that the value of ideal rotational speed corresponds effectively to the desired rotational speed when the drive-off manoeuvre is completed or in any case in the proximity of completion.

In this case, then, in the various successive repetitions of the second, third, fourth, and fifth steps in the proximity of completion of the drive-off manoeuvre the value of target rotational speed $n_{obj,do}$ becomes equal to the value of the ideal rotational speed $n_i$ calculated during the second step, so as to guarantee a uniform radiusing of the rotational speed of the internal-combustion engine to the end-of-manoeuvre conditions and reduce the impulsive phenomena known as "engagement shock" mentioned previously.

The increase in successive stages of the target rotational speed of the drive-off manoeuvre $n_{obj,do}$ is justified in the perspective of rendering the assistance to the drive-off manoeuvre itself transparent to the driver.

In particular, the increases of the target rotational speed $n_{obj,do}$ are controlled at an instant of the drive-off manoeuvre in which they are substantially "masked" behind actions normally performed by the driver, the aim being to prevent the driver from perceiving said interventions as actions outside his own control, interpreting them as source of poor safety or malfunctioning.

In the repetition of the second, third, fourth, and fifth steps from the beginning to end of the drive-off manoeuvre, further actions are carried out in order to improve the safety and quality of the manoeuvre itself. In particular, when at the end of the first step of the method described, the start of the drive-off manoeuvre is recognized, also a disabling of the assistance (i.e., end of the method of assistance) is envisaged whenever one or more anomalies are detected or simply the end of the drive-off manoeuvre itself is detected.

Operatively, this results in a further step of monitoring of the drive-off manoeuvre that develops parallel to the second, third, fourth, and fifth steps (during each repetition thereof) and that consists in identifying anomalies during the drive-off manoeuvre and in determining an instant of completion of the drive-off manoeuvre itself on the basis of a processing of the signals coming from one or more of the sensors from amongst the ones described so as to issue a command for disabling the assistance.

In particular, the following are recognized as anomalous conditions such as to justify the disabling of the assistance to the drive-off manoeuvre:

- a signal S27 corresponding to a neutral position of the control lever 4, on vehicles equipped with the sensor 27; in this case, it is not possible to complete the drive-off manoeuvre since for various reasons the gear selected has been disengaged;
- exceeding of a maximum, calibratable, time of activation of the strategies of assistance to the drive-off manoeuvre; this substantially consists in the repetition of the second, third, fourth, and fifth steps for a time longer than the aforesaid maximum time and can be an index of a malfunctioning of one or more of the sensors/subsystems involved;
- "change of mind" condition, corresponding to a movement of the clutch pedal 8 towards the lowered position after the start of the drive-off manoeuvre to cause a disengagement of the clutch itself; it is a condition detected by the sensor 14 and typically occurs when the driver perceives a certain difficulty in the drive-off manoeuvre and prefers to abort the manoeuvre itself.

The foregoing confirms what was mentioned previously: the end of the drive-off manoeuvre can also correspond to a condition of interruption dictated by the onset of anomalous conditions.

Amongst the conditions that justify disabling of assistance and that are not linked to anomalies in the operation of the system there figures the exceeding of a threshold advancement speed of the vehicle, said threshold advancement speed being calibratable.

It should be noted that following upon the detection of anomalies or of the completion of the drive-off manoeuvre, with the consequent interruption of the method of assistance, the system is brought back upstream the first step, i.e., it is brought back into conditions of "looking out for", so to speak, possible drive-off manoeuvres.

On vehicles equipped with a spark-ignition internal-combustion engine 2, there is activated, downstream of the step of recognition of the drive-off manoeuvre and provided that this has had a positive outcome, a step of creation and management of a reserve of torque (in particular "fast torque", as will be seen hereinafter) of the engine 2.

In general, in a spark-ignition internal combustion engine there are two main levers for modulating the torque supplied by the engine. A first lever is the position of the throttle valve, i.e., the regulation of the amount of air sucked in. This is a "slow-dynamics" process.

The second lever is the regulation of the spark advance, which is instead is a "fast-dynamics" process.

Consequently, the displacement, in particular the reduction, of the spark advance with respect to the nominal value mapped in a given point of operation creates a sort of margin for the increase of torque (which is possible by increasing the advance) that can be exploited, if necessary, and that is usually designated by the term "fast torque reserve ".

Hence, whenever the start of the drive-off manoeuvre is recognized, a command is issued for an increase of the fast torque reserve by means of reduction of the spark advance. Simultaneously, the torque requests of the engine-r.p.m. controller 32 (whether resulting from the method of assistance or not, depending upon which the maximum value of said requirements is) are satisfied by means of the sole variation of the position of the throttle valve.

If the increase in torque resulting from the regulation of the position of the throttle valve were insufficient, for reasons related to the slow dynamics thereof, then the engine control would immediately use part of the fast torque reserve increasing the spark advance almost instantaneously.

In this way, the quality of the drive-off manoeuvre is further improved since the voids in the delivery of torque by the engine 2 during the drive-off manoeuvre are substantially eliminated. The step of creation and management of a torque reserve repeats parallel to the steps second to fifth during the drive-off manoeuvre.

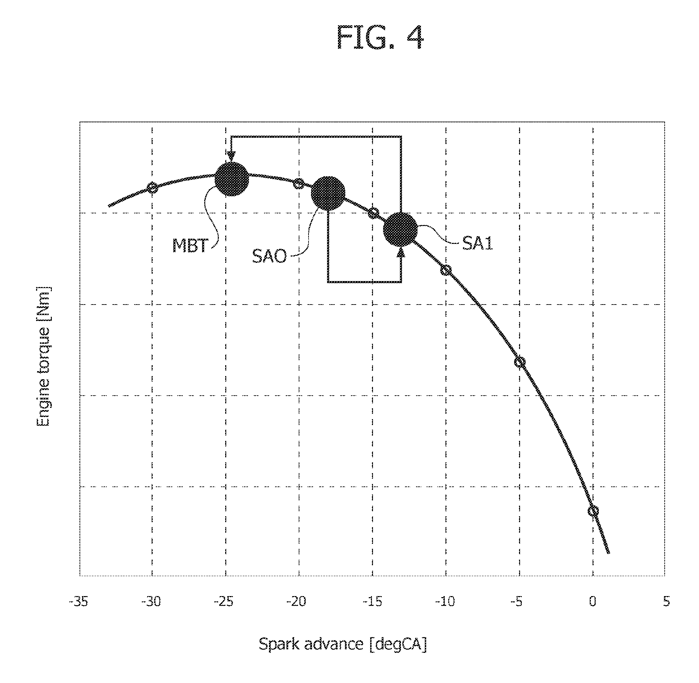

Figure 4 shows an example of the strategy adopted for regulation of the spark advance. The diagram illustrated is of the "torque-spark advance" type, expressed a crank angle measured with respect to the top dead centre (in the diagram it is positive for values after top dead centre).

On the curve displayed three significant points are given; namely,

- a point SA0 corresponding to the value of the nominal spark advance mapped for a given engine point;
- a value SA1 corresponding to the reduced spark advance following upon the recognition of the start of the drive-off manoeuvre; and
- a point MBT corresponding to an spark advance angle that supplies the maximum torque that can be delivered by the engine for a certain load condition; if necessary, the point SA1 can be shifted by the engine control bringing it back towards the nominal value SA0 and even to the value MBT, if the conditions in which the drive-off manoeuvre occurs so require.

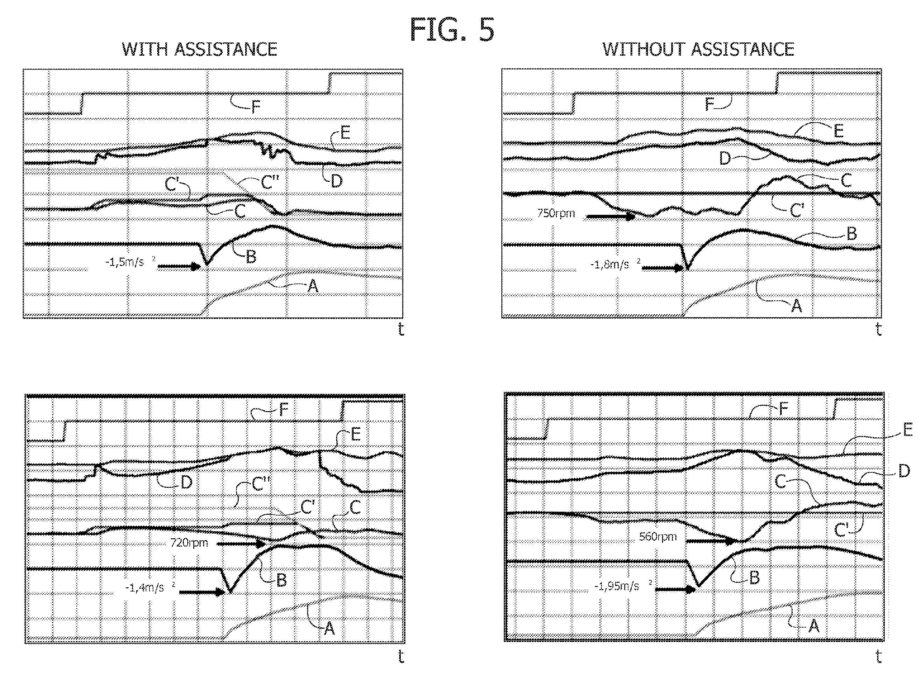

With reference to Figure 5, it is possible to observe graphically the improvement made to the quality of the drive-off manoeuvre by the method of assistance according to the invention by comparing the diagrams on the left, corresponding to two examples of drive-off manoeuvres carried out with assistance on the basis of the method according to the invention and the diagrams on the right, corresponding to the same manoeuvres carried out without assistance to the drive-off manoeuvre.

The diagrams show the curves A, B, C, C', D', E, F with the addition, on the diagrams regarding the drive-off manoeuvres with assistance, of a curve C" describing the plot of the ideal rotational speed $n_i$, saturated at a maximum value, which is fixed and determined on the basis of safety reasons, as a function of time (designated by t, in this and other figures).

What emerges is the greater availability of torque in the cases of assisted drive-off manoeuvre, together with the increases in correspondence with the increases of the target rotational speed that can be observed on the curve C'. There is moreover noted a lower value of the longitudinal acceleration of the vehicle thanks to the assistance strategies adopted, which result in a greater comfort on board the vehicle. Moreover, the rotational speed of the internal-combustion engine 2 does not undergo any significant drops, as instead occurs in drive-off manoeuvres carried out without assistance.

Obviously, the construction details and the embodiments may be widely varied with respect to what has been described and illustrated without thereby departing from the scope of protection of the present invention, as defined by the appended claims.

**Claims**

1. A method for the assistance of a motor-vehicle driver (1) during a drive-off manoeuvre, wherein the motor vehicle (1) comprises:

   - an internal-combustion engine (2);
   - a transmission, connected to said internal-combustion engine (2) by means of a clutch that can be operated by the driver, said transmission further comprising a gearbox that can be operated by the driver;
   - an engine-control unit, operatively connected to the internal-combustion engine (2) and including an engine-r.p.m. controller (32);
   - a first pedal (8) for the actuation of said clutch between a disengaged position in which the transmission is uncoupled from the internal-combustion engine and an engaged position in which the transmission is coupled to the internal-combustion engine;
   - a second pedal (10) for the actuation of a braking system of the motor vehicle (1);
   - first sensor means (14), arranged to detect a position of said first pedal (8);
   - second sensor means (16), arranged to detect a position of said second pedal (10);
   - third sensor means (22), arranged to detect an advancement speed of the motor vehicle ($V_{vehicle}$); and
   - fourth sensor means (24), arranged to detect an acceleration of the motor vehicle (1),
   the method being **characterized in that** it comprises:
   - a first step of recognition of a beginning of a drive-off manoeuvre as a function of signals (S14, S16, S22) coming from said first, second, and third sensor means (14, 16, 22);
   - a second step (30) of calculation of a value of target rotational speed of the drive-off manoeuvre ($n_{obj,do}$);
   - a third step of sending of the value of target rotational speed of the drive-off manoeuvre ($n_{obj,do}$) to said engine-r.p.m. controller (32);
   - a fourth step of calculation of a gain of said engine-r.p.m. controller (32) as a function of a signal (S24) coming from said fourth sensor means; and
   - a fifth step of calculation of a value of target torque ($T_{obj}$) by said engine-r.p.m. controller (32) for maintaining a rotational speed of the internal-combustion engine equal to the value of target rotational speed of the drive-off manoeuvre ($n_{obj,do}$),
wherein said second, third, fourth and fifth steps develop if in said first step a beginning of a drive-off manoeuvre is recognized and are repeated in sequence until the end of the drive-off manoeuvre.

2. The method according to Claim 1, **characterized in that** said first step (28) comprises verifying that:

   - said third sensor means supply a signal (S22) that indicates that said motor vehicle (1) advances with a speed lower than a lower-threshold speed, said lower-threshold speed being calibratable;
   - said first sensor means (14) supply a signal that indicates a movement of said first pedal (8) from a lowered position (L), corresponding to the disengaged position of the clutch, towards a raised position (H), corresponding to the engaged position of the clutch;
   - said second sensor means (16) supply a signal (S16) corresponding to a condition of absence of action by the driver on said second pedal (10); and
   - no failures are present in said first, second, and third sensor means.

3. The method according to Claim 2, **characterized in that** said motor vehicle (1) further comprises sensor means (27) operatively associated to said gearbox and arranged for detecting a condition of neutral or engagement of a gear of said gearbox.

4. The method according to Claim 3, **characterized in that** said first step further comprises verifying that said sensor means (27) operatively associated to said gearbox supply a signal corresponding to a condition of engagement of a gear.

5. The method according to Claim 1, **characterized in that** in said second step the value of said target speed of the drive-off manoeuvre ($n_{obj,do}$) is calculated as a function of:

   - the signal (S14) supplied by said first sensor means (14);
   - the signal (S24) supplied by said fourth sensor means (24);
   - a value of ideal rotational speed ($n_i$) of said internal-combustion engine (2); and
   - a signal (S18) supplied by sensor means (18) arranged for detecting a position of an accelerator pedal (12) of said motor vehicle (1).

6. The method according to Claim 5, **characterized in that** said value of ideal rotational speed ($n_i$) is calculated by means of a balance of momentum across the clutch of said motor vehicle (1).

7. The method according to Claim 1, **characterized in that** it comprises a further step of monitoring of the drive-off manoeuvre that develops parallel to said second, third, fourth, and fifth steps and consists in the search for anomalies during the drive-off manoeuvre and in the identification of completion of the drive-off manoeuvre.

8. The method according to Claim 7, **characterized in that** there is envisaged the ending thereof upon occurrence of a detection of one or more anomalies or a completion of the drive-off manoeuvre during said monitoring step.

9. The method according to Claim 8, **characterized in that** said anomalies comprise:

   - a repetition of said second, third, fourth, and fifth steps for a time longer than a maximum time, said maximum time being calibratable; and
   - a movement, during the drive-off manoeuvre, of said first pedal towards a lowered position corresponding to the disengaged position of the clutch.

10. The method according to Claim 9, **characterized in that** said motor vehicle (1) further comprises sensor means (27) operatively associated to said gearbox and arranged for detecting a condition of neutral or of engagement of a gear of said gearbox, wherein said anomalies further comprise a detection, during the drive-off manoeuvre, of a condition of neutral of said gearbox.

11. The method according to Claim 8, **characterized in that** the completion of the drive-off manoeuvre is recognized when said motor vehicle (1) advances with a speed higher than an upper-threshold speed value.

**EP 2 508 739 A1**

**12.** The method according to Claim 1, **characterized in that**:

said internal-combustion engine (2) is of the spark-ignition type; and
**in that** said method further comprises a step of creation and management of a torque reserve of said internal-combustion engine by means of regulation of a spark advance.

**13.** The method according to Claim 12, **characterized in that** said step of creation and management of a torque reserve is successive to said first step, develops provided that in said first step a beginning of a drive-off manoeuvre has been recognized, and develops parallel to said second, third, fourth, and fifth steps.

**14.** The method according to Claim 5, **characterized in that** the value of said target rotational speed of the drive-off manoeuvre ($n_{obj,do}$) is modulated preferably in four successive stages.

**15.** The method according to Claim 14, **characterized in that** said four stages comprise:

- a first stage, in which a command is issued for a first increase of the value of said target rotational speed of the drive-off manoeuvre ($n_{obj,do}$) upon completion of said first step;
- a second stage, in which a command is issued for a second increase of the value of said target rotational speed of the drive-off manoeuvre ($n_{obj,do}$), said second stage developing upon detection of an action of the driver on a third pedal (18) of said motor vehicle (1), in particular an accelerator pedal, wherein the detection of the action of the driver is carried out by a sensor (18) arranged to detect a position of said third pedal (12);
- a third stage, in which a command is issued for a third increase of the value of said target rotational speed of the drive-off manoeuvre ($n_{obj,do}$), that develops when the acceleration of the vehicle oversteps a threshold value.
- a fourth stage comprising a radiusing of the value of said target rotational speed of the drive-off manoeuvre ($n_{obj,do}$) to the value of ideal rotational speed ($n_i$).

**16.** The method according to Claim 1, **characterized in that** said motor vehicle further comprises fifth sensor means designed to detect a rotational speed of the internal-combustion engine (2), wherein said first step of recognition of the start of a drive-off manoeuvre is developed also as a function of signals coming from said fourth and fifth sensor means (24, 26).

**12**

FIG. 1

engine speed [rpm]

Engine torque [Nm]

FIG. 2

P1  P2  P3

pressed
middle
released

480 rpm

1.45m/s²

G
F
E
D
C
C'
B
A

t

FIG. 3

# FIG. 3A

FIG. 4

FIG. 5

WITHOUT ASSISTANCE

750rpm

-1,8m/s²

560rpm

-1,95m/s²

WITH ASSISTANCE

-1,5m/s²

720rpm

-1,4m/s²

Europäisches
Patentamt

European
Patent Office

Office européen
des brevets

# EUROPEAN SEARCH REPORT

**Application Number**

EP 11 16 1086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 930 424 A2 (VOLKSWAGEN AG [DE]) 21 July 1999 (1999-07-21) * abstract * * paragraphs [0011] - [0012] * * figures 1-2 * | 1-14,16 | INV. F02D41/10 F02D11/10 F02D41/02 F02P5/15 |
| Y | US 2004/040765 A1 (SATOU SHINYA [JP] ET AL) 4 March 2004 (2004-03-04) * abstract * * figure 1 * | 1-14,16 | |
| Y | DE 10 2006 029044 A1 (FORD GLOBAL TECH LLC [US]) 3 January 2008 (2008-01-03) * abstract * * paragraphs [0008], [0023] - [0033] * * figures 1,2 * | 1-14,16 | |
| A | EP 1 455 071 A2 (HITACHI LTD [JP]) 8 September 2004 (2004-09-08) * abstract * * figures 4,8,13 * | 1 | |
| A | DE 10 2009 033653 A1 (BAYERISCHE MOTOREN WERKE AG [DE]) 20 January 2011 (2011-01-20) * abstract * * figures 1,2 * | 1 | TECHNICAL FIELDS SEARCHED (IPC) F02D F02P |
| A | FR 2 844 553 A1 (SIEMENS AG [DE]) 19 March 2004 (2004-03-19) * abstract * * claims 1-3 * * figure 2 * | 1 | |

The present search report has been drawn up for all claims

| Place of search | Date of completion of the search | Examiner |
|---|---|---|
| The Hague | 14 September 2011 | Trotereau, Damien |

EPO FORM 1503 03.82 (P04C01)

**EP 2 508 739 A1**

## ANNEX TO THE EUROPEAN SEARCH REPORT
## ON EUROPEAN PATENT APPLICATION NO.

EP 11 16 1086

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2011

| Patent document cited in search report | | Publication date | Patent family member(s) | | Publication date |
|---|---|---|---|---|---|
| EP 0930424 | A2 | 21-07-1999 | DE | 19801206 A1 | 22-07-1999 |
| US 2004040765 | A1 | 04-03-2004 | DE | 10312185 A1 | 25-03-2004 |
| | | | JP | 3918686 B2 | 23-05-2007 |
| | | | JP | 2004090712 A | 25-03-2004 |
| DE 102006029044 | A1 | 03-01-2008 | NONE | | |
| EP 1455071 | A2 | 08-09-2004 | CN | 1526581 A | 08-09-2004 |
| | | | JP | 2004263647 A | 24-09-2004 |
| DE 102009033653 | A1 | 20-01-2011 | NONE | | |
| FR 2844553 | A1 | 19-03-2004 | DE | 10243143 A1 | 01-04-2004 |